# EUROPEAN PATENT APPLICATION

(11) **EP 2 913 767 A1**
(43) Date of publication of application: **02.09.2015**
(21) Application number: 14802582.8
(22) Date of filing: 01.07.2014
(51) Int. Cl.: G06F 17/30

(54) **PAGE PROCESSING METHOD, APPARATUS AND SYSTEM**

(30) Priority: 31.12.2013 CN 201310754226
(71) Applicant: Huawei Technologies Co., Ltd., Longgang District Shenzhen, Guangdong 518129 (CN)
(72) Inventor: LIANG, Shouqing, Shenzhen Guangdong 518129 (CN); ZHU, Liang, Shenzhen Guangdong 518129 (CN)
(74) Representative: Haley, Stephen
(86) International application number: PCT/CN2014/081398
(87) International publication number: WO 2015/100994

(57) **Abstract**

Embodiments of the present invention provide a page processing method, an apparatus, and a system. The method according to the present invention includes: generating a parsing policy table according to a page attribute and/or a client attribute received from a client browser, where the parsing policy table is used to determine a parsing manner for a page that a user requests to access, and the parsing manner includes parsing on a web server and/or parsing on the client browser; determining, according to the parsing policy table, the parsing manner for the page that the user requests to access; and parsing, according to the parsing manner, the page that the user requests to access. According to the embodiments of the present invention, a parsing policy table is generated, so that different parsing manners may be selected according to an actual network or a service situation, which achieves flexible page processing and improves page processing efficiency.

## Description

### TECHNICAL FIELD

The present invention relates to the field of communications, and in particular, to a page processing method, an apparatus, and a system.

### BACKGROUND

With the development of informatization, networks are closely related to people's daily life day by day, and a user may communicate, by surfing the Internet to browse web pages, send and receive e-mails, subscribe to data, and the like, with friends without going out. A rich Internet application (Rich Internet Application, RIA) may not only provide an interaction scheme similar to that of a desktop program, but also have an installation-free characteristic of a browser/server (Browser/Server, B/S) program, so as to have a desirable presentation capability and interaction capability, and can better satisfy user's intuitive and interactive online experience.

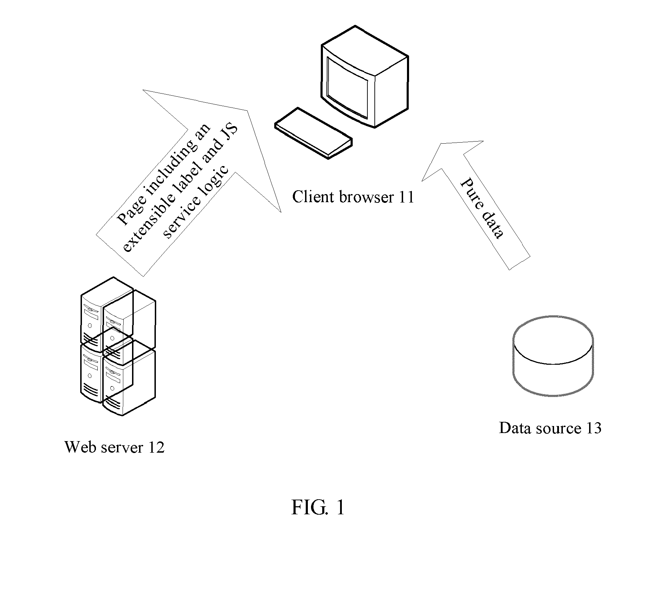

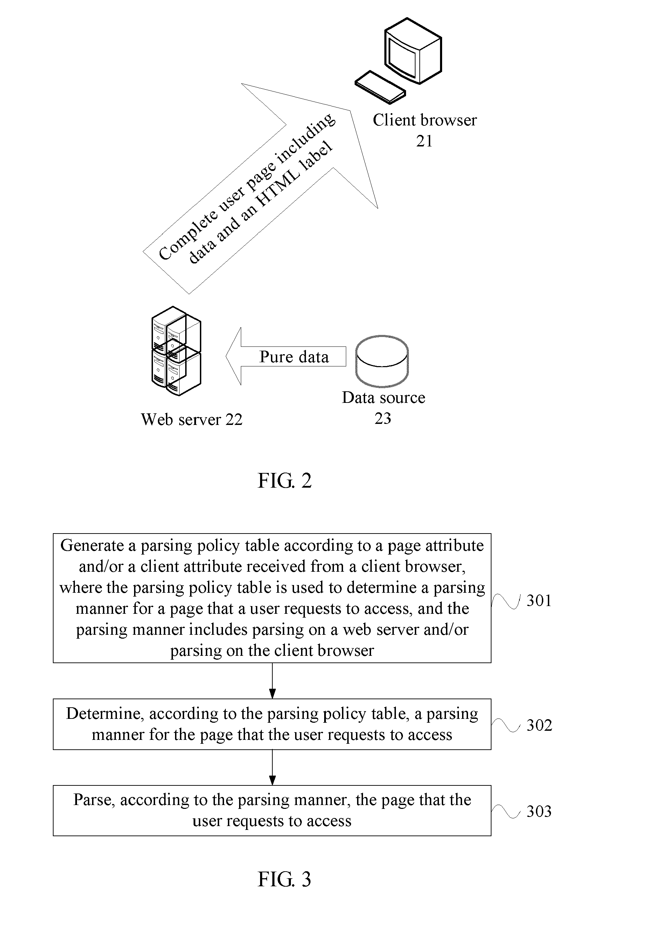

In the prior art, a client browser 11 requests a Web application URL related to a service from a web server 12; the web server 12 returns an extensible Hypertext Markup Language (Hypertext Markup Language, HTML) label of the service and a scripting (such as JavaScript, JS) language logic related to the extensible label; the browser parses and responds to the label in a foreground, generates an HTML template that has not bound data, and simultaneously, delivers Ajax to the web server 12 to request service data from a data source 13, and the browser binds the service data corresponding to the label to the JS logic to generate an HTML page for display (as shown in FIG. 1); or a client browser 21 requests, from a web server 22, a Web application URL related to a service, the web server 22 performs label parsing to obtain an HTML template, binds the HTML template and data that is obtained from a data source 23 to generate a response page including the data and the HTML label, and then, sends the response page to the client browser for display (as shown in FIG. 2).

However, in the prior art, parsing a page is fixedly set regardless of whether the page is parsed on a server or a client browser, and a parsing manner cannot be dynamically selected according to a service attribute or an actual network situation, which causes inflexible page processing. Therefore, when there are a large number of page access requests, relatively slow system processing and relatively low efficiency are caused.

### SUMMARY

The present invention provides a page processing method, an apparatus, and a system, which improve page processing efficiency and flexibility.

According to a first aspect, an embodiment of the present invention provides a page processing method, and the method includes:
generating a parsing policy table according to a page attribute and/or a client attribute received from a client browser, where the parsing policy table is used to determine a parsing manner for a page that a user requests to access, and the parsing manner includes parsing on a web server and/or parsing on the client browser;
determining, according to the parsing policy table, the parsing manner for the page that the user requests to access; and
parsing, according to the parsing manner, the page that the user requests to access.

In a first possible implementation manner of the first aspect, if it is determined, according to the parsing policy table, that the parsing manner for the page that the user requests to access is parsing on the client browser, the parsing, according to the parsing manner, the page that the user requests to access includes:
inferring a label that needs to be used by a page that the user next requests to access;
pre-parsing the inferred label that needs to be used by the page, and storing the pre-parsed label in buffer space; and
generating an HTML inferred template according to the pre-parsed label stored in the buffer space, and sending the HTML inferred template to the client browser, so that the client browser parses a page returned after the user requests to access the page, and generates, by binding the parsed page and data in a data source, the page for display to the user.

In a second possible implementation manner of the first aspect, if it is determined, according to the parsing policy table, that the parsing manner for the page that the user requests to access is parsing on the server, the parsing, according to the parsing manner, the page that the user requests to access includes:
inferring a label that needs to be used by a page that the user next requests to access;
pre-parsing the inferred label that needs to be used by the page, and storing the pre-parsed label in buffer space;
generating an HTML inferred template according to the pre-parsed label stored in the buffer space, parsing, according to the HTML inferred template, a page returned after the user requests to access the page, and generating, by binding the parsed page and data in a data source, the page for display to the user; and
sending the page for display to the user, to the client browser.

According to the second possible implementation manner of the first aspect, in a third possible implementation manner of the first aspect, the parsing, according to the HTML inferred template, a page returned after the user requests to access the page includes:
generating a request response label queue according to a message that the user requests to access a web page and that is sent by the client browser;
generating a pre-parsed label queue according to the pre-parsed label; and
selectively executing the request response label queue or the pre-parsed label queue according to a preset priority.

According to the first or second possible implementation manner of the first aspect, in a fourth possible implementation manner of the first aspect, the pre-parsing the inferred label that needs to be used by the page, and storing the pre-parsed label in buffer space includes:
pre-parsing the inferred label that needs to be used by the page, storing, in buffer space, a common label of a plurality of users, a part of parsed labels, or a label that needs to be buffered according to a decision based on the parsing policy table, and sending a label peculiar to the user to the client browser and storing the label in buffer space of the client browser.

According to the first or second possible implementation manner of the first aspect, in a fifth possible implementation manner of the first aspect, the inferring a label that needs to be used by a page that the user next requests to access includes:
creating a page database of a page that the user has requested to access, where a page that the user has accessed historically is stored in the page database; and
receiving the page that the user requests to access, and inferring, with reference to the page database, the label that needs to be used by the page that the user next requests to access.

According to the first possible implementation manner of the first aspect, in a sixth possible implementation manner of the first aspect, the sending the HTML inferred template to the client browser includes:
actively pushing the HTML inferred template to the client browser; or
sending the HTML inferred template to the client browser after a message that is of requesting to acquire the HTML inferred template and is sent by the client browser is received.

According to any one of the first to sixth possible implementation manners of the first aspect, in a seventh possible implementation manner of the first aspect, the label is a label with service semantics, or a common component label with data processing and display logic.

In an eighth possible implementation manner of the first aspect, the page attribute includes a page configuration preference policy, a page data binding location, or a page related parameter, and the client attribute includes a client browser type, a network access type of a client, or a client application scenario type.

According to a second aspect, an embodiment of the present invention provides a page processing method, and the method includes:
sending a request page attribute and/or a client attribute to the web server, so that the web server generates a parsing policy table;
receiving an HTML inferred template sent by the web server; and
when a page returned after a user requests to access the page is received, parsing the returned page according to the HTML inferred template, and generating, by binding the parsed page and data provided by a data source, the page for display to the user.

In a first possible implementation manner of the second aspect, the receiving an HTML inferred template sent by the web server includes:
receiving the HTML inferred template actively pushed by the web server; or
if a web page returned after the user requests to access the web page needs to be parsed, sending a message of requesting to acquire the HTML inferred template to the web server, and then, receiving the HTML inferred template to which the web server requests to respond.

In a second possible implementation manner of the second aspect, the page attribute includes a page configuration preference policy, a page data binding location, or a page related parameter, and the client attribute includes a client browser type, a network access type of a client, or a client application scenario type.

According to a third aspect, an embodiment of the present invention provides a web server, and the web server includes:
a generating module, configured to generate a parsing policy table according to a page attribute and/or a client attribute received from a client browser, where the parsing policy table is used to determine a parsing manner for a page that a user requests to access, and the parsing manner includes parsing on a web server and/or parsing on the client browser;
a determining module, configured to determine, according to the parsing policy table, the parsing manner for the page that the user requests to access; and
a parsing module, configured to parse, according to the parsing manner, the page that the user requests to access.

In a first possible implementation manner of the third aspect, the parsing manner is parsing on a client, and the web server further includes:
an inferring module, configured to infer a label that needs to be used by a page that the user next requests to access;
a pre-parsing module, configured to pre-parse the inferred label that needs to be used by the page, and store the pre-parsed label in buffer space; and
a sending module, configured to generate a Hypertext Markup Language HTML inferred template according to the pre-parsed label stored in the buffer space, and send the HTML inferred template to the client browser, so that the client browser parses a page returned after the user requests to access the page, and generates, by binding the parsed page and data in a data source, the page for display to the user.

In a second possible implementation manner of the third aspect, the parsing manner is parsing on the server, and the web server further includes:
an inferring module, configured to infer a label that needs to be used by a page that the user next requests to access;
a pre-parsing module, configured to pre-parse the inferred label that needs to be used by the page, and store the pre-parsed label in buffer space;
a displayed-page generating module, configured to generate an HTML inferred template according to the pre-parsed label stored in the buffer space, parse, according to the HTML inferred template, a page returned after the user requests to access the page, and generate, by binding the parsed page and data in a data source, the page for display to the user; and
a sending module, configured to send the page for display to the user, to the client browser.

According to the second possible implementation manner of the third aspect, in a third possible implementation manner of the third aspect, the parsing module is specifically configured to:
generate a request response label queue according to a message that the user requests to access a web page and that is sent by the client browser;
generate a pre-parsed label queue according to the pre-parsed label; and
selectively execute the request response label queue or the pre-parsed label queue according to a preset priority.

According to the first or second possible implementation manner of the third aspect, in a fourth possible implementation manner of the third aspect, the pre-parsing module is specifically configured to:
pre-parse the inferred label that needs to be used by the page, store, in buffer space, a common label of a plurality of users, a part of parsed labels, or a label that needs to be buffered according to a decision based on the parsing policy table, and send a label peculiar to the user to the client browser and store the label in buffer space of the client browser.

According to the first or second possible implementation manner of the third aspect, in a fifth possible implementation manner of the third aspect, the inferring module is specifically configured to:
create a page database of a page that the user has requested to access, where a page that the user has accessed historically is stored in the page database; and
receive the page that the user requests to access, and infer, with reference to the page database, the label that needs to be used by the page that the user next requests to access.

According to the first possible implementation manner of the third aspect, in a sixth possible implementation manner of the third aspect, the sending module is specifically configured to:
actively push the HTML inferred template to the client browser; or
send the HTML inferred template to the client browser after a message that is of requesting to acquire the HTML inferred template and is sent by the client browser is received.

According to any one of the first to sixth possible implementation manners of the third aspect, in a seventh possible implementation manner of the third aspect, the label parsed by the pre-parsing module is a label with service semantics, or a common component label with data processing and display logic.

In an eighth possible implementation manner of the third aspect, the page attribute received by the generating module includes a page configuration preference policy, a page data binding location, or a page related parameter, and the client attribute includes a client browser type, a network access type of a client, or a client application scenario type.

According to a fourth aspect, an embodiment of the present invention provides a client browser, and the client browser includes:
a sending module, configured to send a request page attribute and/or a client attribute to the web server, so that the web server generates a parsing policy table;
a receiving module, configured to receive a Hypertext Markup Language HTML inferred template sent by the web server; and
a parsing module, configured to, when a page returned after a user requests to access the page is received, parse the returned page according to the HTML inferred template, and generate, by binding the parsed page and data provided by a data source, the page for display to the user.

In a first possible implementation manner of the fourth aspect, the receiving module is specifically configured to:
receive the HTML inferred template actively pushed by the web server; or
if a web page returned after the user requests to access the web page needs to be parsed, send a message of requesting to acquire the HTML inferred template to the web server, and then, receive the HTML inferred template to which the web server requests to respond.

In a second possible implementation manner of the fourth aspect, the page attribute sent by the sending module includes a page configuration preference policy, a page data binding location, or a page related parameter, and the client attribute includes a client browser type, a network access type of a client, or a client application scenario type.

According to a fifth aspect, an embodiment of the present invention provides a page processing system, the page processing system includes a web server, a client, and a data source, where the web server includes the web server according to the third aspect, or any one of the first to eighth possible implementation manners of the third aspect, and the client includes the client browser according to the fourth aspect, or any one of the first and second possible implementation manners of the fourth aspect.

According to the embodiments of the present invention, a parsing policy table is generated, so that different parsing manners are determined and selected according to an actual network or a service situation, which solves problems of insufficiently flexible page processing and low processing efficiency in the prior art.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a structural diagram of a network on which a web page is parsed on a client browser in the prior art;
FIG. 2 is a structural diagram of a network on which a web page is parsed on a server in the prior art;
FIG. 3 is a flowchart of a page processing method according to Embodiment 1 of the present invention;
FIG. 4 is a flowchart of a page processing method according to Embodiment 2 of the present invention;
FIG. 5 is a flowchart of a page processing method according to Embodiment 3 of the present invention;
FIG. 6 is a flowchart of a page processing method according to Embodiment 4 of the present invention;
FIG. 7 is a structural diagram of a web server according to Embodiment 5 of the present invention;
FIG. 8 is a structural diagram of a web server according to Embodiment 6 of the present invention;
FIG. 9 is a structural diagram of a web server according to Embodiment 7 of the present invention;
FIG. 10 is a structural diagram of a client browser according to Embodiment 8 of the present invention;
FIG. 11 is an architectural diagram of a page processing system according to Embodiment 9 of the present invention;
FIG. 12 is a structural diagram of a web server according to Embodiment 10 of the present invention; and
FIG. 13 is a structural diagram of a client device according to Embodiment 11 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

A method according to an embodiment of the present invention may be applied to a page processing system including a web server, a client, and a data source, where the client is provided with a page processing browser, for example, a page processing system using a mode in which data binding and label parsing are separated.

FIG. 3 is a flowchart of a page processing method according to Embodiment 1 of the present invention. The method is performed by a web server, for example, a static web server. As shown in FIG. 3, the method specifically includes:
Step 301: Generate a parsing policy table according to a page attribute and/or a client attribute received from a client browser, where the parsing policy table is used to determine a parsing manner for a page that a user requests to access, and the parsing manner includes parsing on a web server and/or parsing on the client browser.

Optionally, the page attribute may include a page-related attribute, such as a page configuration preference policy, a page data binding location, or a page related parameter. The page related parameter may be the quantity of labels of a page, whether data is bound on a server or a client, or other factors.

The client attribute includes an attribute that is related to displaying the page and is of a client, such as a client browser type, a display screen size, a network access type of the client, and a client application scenario type, for example, the attribute may be a parameter, such as, a user browser type (a PC, a Pad, or a Mobile), an access type (a fixed network, a wireless GPRS, 3G/4G, or Wifi), an amount of electricity on the client, data traffic, or a user scenario (whether roaming occurs or not, or whether a server is idle).
Step 302: Determine, according to the parsing policy table, the parsing manner for the page that the user requests to access.

The parsing manner is determined according to the parsing policy table. For example, parsing only on the web server or parsing only on the client browser may be selected; or according to a proportion, one part is parsed on the web server, and the other part is parsed on the client browser. According to this embodiment of the present invention, different parsing policies may be formulated according to different permutations and combinations, that is, the parsing policies include but are not limited to the foregoing 3 default policies, different parsing manners may be selected according to different pages, or a parsing manner is decided by the client browser itself, or a parsing manner is decided by the web server itself, which is not limited in the present invention.
Step 303: Parse, according to the parsing manner, the page that the user requests to access.

It can be learned from the foregoing that, compared with that in the prior art in which a page that is parsed on a server or a client browser is fixedly set, and a parsing manner cannot be dynamically selected according to a service attribute or an actual network situation, in this embodiment of the present invention, a parsing policy table is generated, so that different parsing manners may be selected according to an actual network or a service situation, which achieves flexible page processing, thereby improving page processing efficiency.

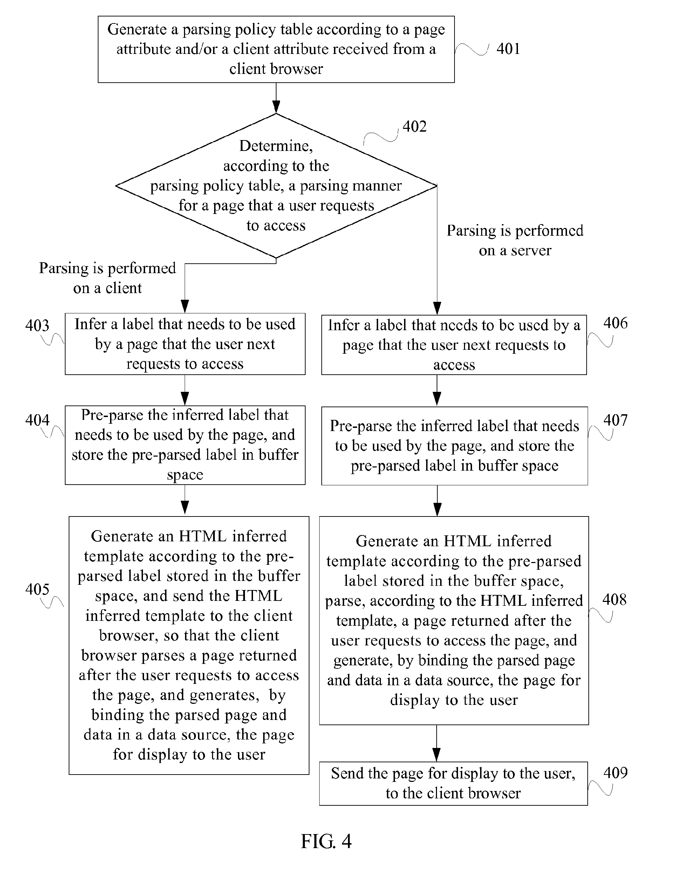

FIG. 4 is a flowchart of a page processing method according to Embodiment 2 of the present invention. In this embodiment, a label pre-parsing step is added on the basis of the previous embodiment. As shown in FIG. 4, the method may specifically include:
Step 401: Generate a parsing policy table according to a page attribute and/or a client attribute received from a client browser.

In the step, the page attribute and the client attribute are the same as those of the previous embodiment, and no details are repeatedly described herein.

Optionally, when the step is specifically implemented, a user may perform manual configuration to generate the parsing policy table according to the page attribute and/or the client attribute; or
the parsing policy table is automatically generated according to the page attribute and/or the client attribute.

For example, it is set that a configuration policy is intelligently used according to different user terminal types and network types, so as to self-adapt to a user scenario, for example, a user scenario, being roaming or local, may be matched automatically.
S402: Determine, according to the parsing policy table, a parsing manner for a page that a user requests to access.

The parsing manner may be set to compiling on a server, compiling on a browser, or an intelligent hybrid mode, that is, a part is compiled on a server, and a part is compiled on a browser, and Table 1 is used as an example in the following. When a client type is a mobile phone, an access type of the mobile phone is a 3G mode, user preference is set to traffic saving, a scenario is local, and remaining power is less than 20%, and a state of a server is idle, it can be determined that compiling on the browser is selected as the parsing manner, that is, label parsing and data binding are performed on the client browser.

**Table 1**

| **Client type** | **Network type** | **Setting of user preference** | **Scenario** | **Remaining power** | **Server state** | **Parsing policy** |
|---|---|---|---|---|---|---|
| Mobile phone | 2G | Performance first | Roaming | >50% | Busy | Parsing on a server |
| | 3G | Traffic saving | Local | <20% | Idle | Parsing on a client browser |
| | Wifi | Power saving mode | Roaming | [50%, 20%] | The number of users < A maximum number of users/2 | Intelligent hybrid |
| iPad | ... | ... | ... | ... | ... | ... |
| ... | ... | ... | ... | ... | ... | ... |
| ... | ... | ... | ... | ... | ... | ... |
| PC | ... | ... | ... | ... | ... | ... |
| ... | ... | ... | ... | ... | ... | ... |
| ... | ... | ... | ... | ... | ... | ... |

Further, if the parsing manner determined in the step is parsing on a client, steps 403 to 405 are executed.
Step 403: Infer a label that needs to be used by a page that the user next requests to access.

When the step is specifically implemented, an optional implementation manner is: first creating a page database of a page that the user has requested to access; and then, receiving the page that the user requests to access, and inferring, with reference to the page database, the label that needs to be used by the page that the user next requests to access. For example, a label, to be used by the user next, is calculated according to statistical experience and a service procedure.
Step 404: Pre-parse the inferred label that needs to be used by the page, and store the pre-parsed label in buffer space.

It should be noted that, the label described in this embodiment of the present invention represents an application or a service-covering component (which may be parsed into specific service code, such as executable HTML+JS+CSS), or a common component, and after the label is translated or parsed, a template that does not include data, an empty application without data, or the like is generated.

When the step is specifically implemented, a preferable implementation manner is: pre-parsing the inferred label that needs to be used by the page, storing, in buffer space, a common label of a plurality of users, a part of parsed labels, or a label that needs to be buffered according to a decision based on the parsing policy table, and sending a label peculiar to the user to the client browser and storing the label in buffer space of the client browser. The label peculiar to the user refers to a self-defined label that is of the user and differs from another user's label. A label is buffered both on a browser side and a server side, so that it is implemented that operations on parsing and data transmission for an extensible label or HTML label are reduced, thereby bandwidth consumption is reduced
Step 405: Generate an HTML inferred template according to the pre-parsed label stored in the buffer space, and send the HTML inferred template to the client browser, so that the client browser parses a page returned after the user requests to access the page, and generates, by binding the parsed page and data in a data source, the page for display to the user.

Optionally, in the step, the sending the HTML inferred template to the client browser includes:
actively pushing the HTML inferred template to the client browser; or
sending the HTML inferred template to the client browser after a message that is of requesting to acquire the HTML inferred template and is sent by the client browser is received.

Further, in the step, the parsing, according to the HTML inferred template, a page returned after the user requests to access the page includes:
generating a request response label queue according to a message that the user requests to access a web page and that is sent by the client browser;
generating a pre-parsed label queue according to the pre-parsed label; and
selectively executing the request response label queue or the pre-parsed label queue according to a preset priority.

The foregoing algorithm for queue scheduling and execution may be, and includes but is not limited to a queue scheduling algorithm based on a behavioral habit of a user, a role that a user plays, a most-recently-or-most-frequently-used rule, first-in first-out or the like.

It can be learned from the foregoing that, in the foregoing solution, dual queues, namely the request response label queue and the pre-parsed label queue, are scheduled and executed, so that parallel execution of a request response and pre-parsing is implemented, thereby further improving page processing efficiency.

If it is determined in step 402 that parsing is on a server, steps 406 to 409 are executed.
S406: Infer a label that needs to be used by a page that the user next requests to access.
Step 407: Pre-parse the inferred label that needs to be used by the page, and store the pre-parsed label in buffer space.
Step 408: Generate an HTML inferred template according to the pre-parsed label stored in the buffer space, parse, according to the HTML inferred template, a page returned after the user requests to access the page, and generate, by binding the parsed page and data in a data source, the page for display to the user.
Step 409: Send the page for display to the user, to the client browser.

It can be learned from the foregoing that, according to this embodiment of the present invention, a label that needs to be used by a page that a user next requests to access is inferred, so that the inferred label is pre-parsed, thereby reducing data transmission of a repetitive label on a network, reducing resource consumption due to parsing of a repetitive label, and improving page processing efficiency.

Further, in addition to what is in the foregoing embodiment, the label may be a label with service semantics, or a common component label with data processing and display logic.

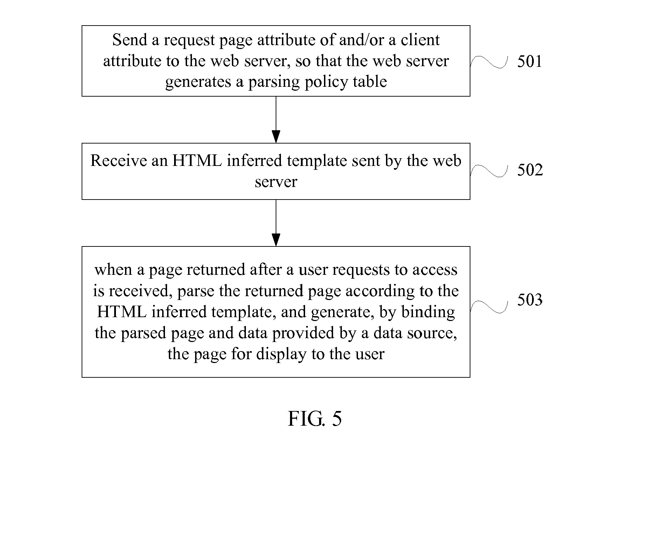

FIG. 5 is a flowchart of a page processing method according to Embodiment 3 of the present invention. The method is performed by a browser that is configured on a client. As shown in FIG. 5, the method includes:
Step 501: Send a request page attribute and/or a client attribute to a web server, so that the web server generates a parsing policy table.

In the step, the page attribute may include a page configuration preference policy, a page data binding location, or a page related parameter, and the client attribute includes a client browser type, a network access type of a client, or a client application scenario type. For example, a user status parameter is intercepted by using a section method, put in a parameter of a URL that a user requests, and is not merely limited to a parameter carrier, such as a URL, an http request parameter, or a session.
Step 502: Receive an HTML inferred template sent by the web server.

The step may optionally include: receiving the HTML inferred template actively pushed by the web server; or
if a web page returned after the user requests to access the web page needs to be parsed, sending a message of requesting to acquire the HTML inferred template to the web server, and then, receiving the HTML inferred template to which the web server requests to respond.

It should be noted that, a client browser also buffers the received HTML inferred template locally for subsequently parsing and calling a web page that a user accesses. Therefore, a dual buffering mechanism on the client browser and on the server is implemented, and a web page is processed more quickly.
Step 503: When a page returned after a user requests to access the page is received, parse the returned page according to the HTML inferred template, and generate, by binding the parsed page and data provided by a data source, the page for display to the user.

It can be learned from the foregoing that, according to this embodiment of the present invention, a request page attribute and/or a client attribute information are/is sent to a web server, so that the web server generates a parsing policy table, and a web page parsing manner is dynamically determined according to the parsing policy table, thereby solving a problem of inflexible page processing in the prior art.

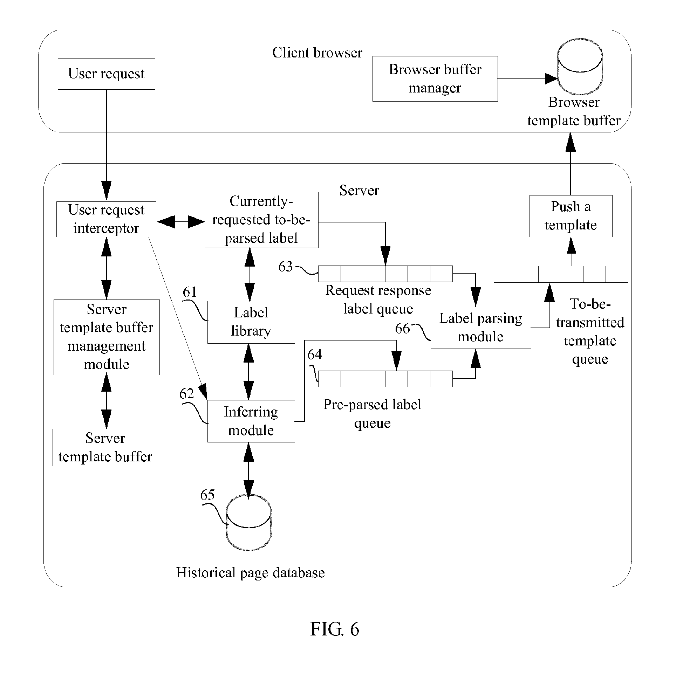

FIG. 6 is a flowchart of a page processing method according to Embodiment 4 of the present invention. As shown in FIG. 6, a page parsing procedure is as follows:
1. When a user requests to access a page, it is first checked whether the page that the user requests to access is buffered on a browser buffer, and if the page that the user requests to access is buffered on a browser buffer, pure data is directly fetched from a server, and the buffered page and the pure data are bound to generate a finally displayed page.
2. If the page that the user requests to access is not buffered, the user access request is sent to a user request interceptor, and the request is distributed via the interceptor, for example, whether it is the first time to request access is determined.
   2.1. If a new service is requested for a first time, a current to-be-parsed label is put in a request response label queue 63 based on a label library 61, a label compiling and parsing module 66 preferentially acquires a to-be-parsed label in the queue to perform parsing (in a hybrid mode, an execution degree of parsing needs to be decided according to a policy table, that is, a server performs template parsing, and a browser performs data binding and page generation), and a parsed result is transferred to the browser in a manner of pushing or directly responding to a user, and simultaneously, the parsed result is buffered on the browser.
   2.2. If the service is not requested for the first time, a service buffer is searched, and simultaneously, a request for inferring a label that needs to be used by a page that the user next requests to access is sent to an inferring module 62, and the inferred label is put in a pre-parsed label queue, where the inferring module 62 infers, based on a historical page database 65, the label that needs to be used by the page that the user next requests to access.

   Optionally, for a same label, two unused template generation mechanisms and data binding logic are provided for different devices, so as to adapt to requirements, such as different screen sizes, device types and the like. For example, according to different screen sizes of different mobile phone models, templates with corresponding sizes are used, so as to adapt to requirements that a user browses on different client devices.
3. When a page is compiled and parsed for a first time in step 2.1, the browser generates a page, before or when a foreground operation of the user is submitted for a next step, the background inferring module 62 infers a possible next service step and a label of a page according to a workflow and user's behaviors and operation habits, puts the label of the page in a pre-parsed label parsing queue 64, and when a server is idle, the server compiles and parses a related page and a service label template, puts a parsed result of the related page and the service label template in a server template buffer, and simultaneously, pushes the parsed result of the related page and the service label template to a browser template buffer.
4. During a pushing or page responding process, determining may be performed by using a priority queue, where a priority of responding to a current user is high, a priority of inferring a next service step is low, and a template pushing module performs pushing or responds to a user request or predicts a request according to the priority.

It can be learned from the foregoing, according to steps 1 to 4 in this embodiment, a pre-parsed label can be stored in a template buffer of a server or of a client browser according to configuration, so that dual buffering of the pre-parsing is achieved, thereby further improving page processing efficiency.

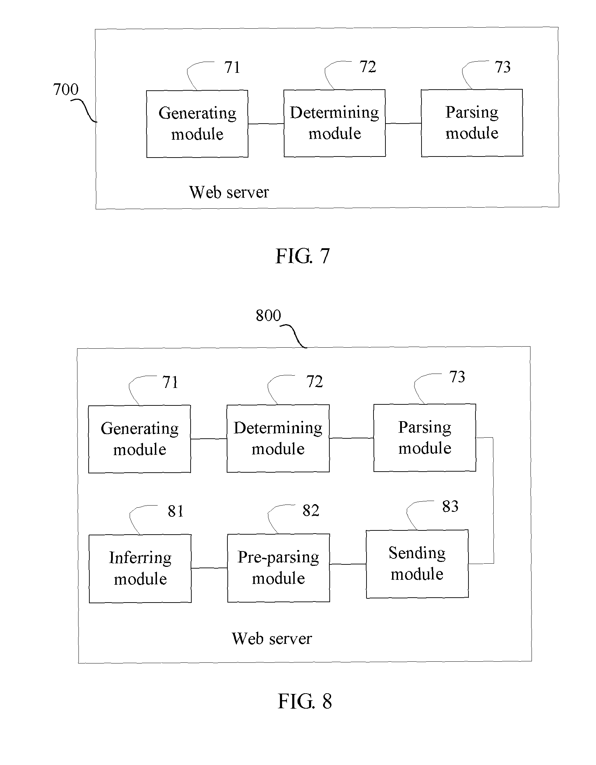

FIG. 7 is a structural diagram of a web server according to Embodiment 5 of the present invention. As shown in FIG. 7, a web server 700 includes a generating module 71, a determining module 72, and a parsing module 73.

The generating module 71 is configured to generate a parsing policy table according to a page attribute and/or a client attribute received from a client browser, where the parsing policy table is used to determine a parsing manner for a page that a user requests to access, and the parsing manner includes parsing on a web server and/or parsing on the client browser.

The determining module 72 is configured to determine, according to the parsing policy table, the parsing manner for the page that the user requests to access.

The parsing module 73 is configured to parse, according to the parsing manner, the page that the user requests to access.

The web server in this embodiment may be configured to execute the technical solution of the method embodiment shown in FIG. 3, and has functional modules corresponding to the steps. Implementation principles and technical effects of the web server in this embodiment are similar to those in the method embodiment shown in FIG. 3, and details are not repeatedly described herein.

It can be learned from the foregoing that, before a web server provided in this embodiment parses a page, a parsing policy table is generated, so that a to-be-used parsing manner is determined, which achieves flexible adjustment of a parsing manner, and improves page processing efficiency.

FIG. 8 is a structural diagram of a web server according to Embodiment 5 of the present invention. According to this embodiment, on the basis of what is shown in FIG. 7, it is assumed that the determined parsing manner is parsing on a client. As shown in FIG. 8, the web server 800 further includes:
an inferring module 81, configured to infer a label that needs to be used by a page that the user next requests to access;
a pre-parsing module 82, configured to pre-parse the inferred label that needs to be used by the page, and store the pre-parsed label in buffer space; and
a sending module 83, configured to generate a Hypertext Markup Language HTML inferred template according to the pre-parsed label stored in the buffer space, and send the HTML inferred template to the client browser, so that the client browser parses a page returned after the user requests to access the page, and generates, by binding the parsed page and data in a data source, the page for display to the user.

Further, the inferring module 81 is specifically configured to:
create a page database of a page that the user has requested to access, where a page that the user has accessed historically is stored in the page database; and
receive the page that the user requests to access 71, and infer, with reference to the page database, the label that needs to be used by the page that the user next requests to access.

The web server in this embodiment may be configured to execute the technical solution of the method embodiment shown in FIG. 4, and has functional modules corresponding to the steps. Implementation principles and technical effects of the web server in this embodiment are similar to those in the method embodiment shown in FIG. 4, and details are not repeatedly described herein.

On the basis of this embodiment, further, the pre-parsing 82 module is specifically configured to:
pre-parse the inferred label that needs to be used by the page, store, in buffer space, a common label of a plurality of users, a part of parsed labels, or a label that needs to be buffered according to a decision based on the parsing policy table, and send a label peculiar to the user to the client browser and store the label in buffer space of the client browser.

On the basis of this embodiment, further, the sending module 83 is specifically configured to:
actively push the HTML inferred template to the client browser; or
send the HTML inferred template to the client browser after a message that is of requesting to acquire the HTML inferred template and is sent by the client browser is received.

It can be learned from the foregoing that, according to the foregoing embodiment, a generated HTML inferred template is sent to a client browser, so that the client browser processes a page in advance, and efficiency of page processing on the client browser is further improved.

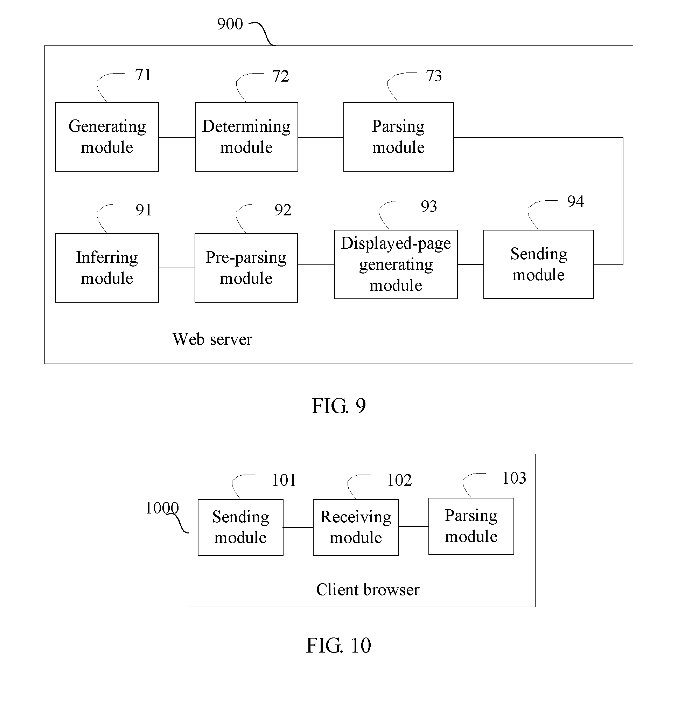

FIG. 9 is a structural diagram of a web server according to Embodiment 7 of the present invention. According to this embodiment, on the basis of what is shown in FIG. 7, it is assumed that the determined parsing manner is parsing on the server. As shown in FIG. 9, the web server 900 further includes:
an inferring module 91, configured to infer a label that needs to be used by a page that the user next requests to access;
a pre-parsing module 92, configured to pre-parse the inferred label that needs to be used by the page, and store the pre-parsed label in buffer space;
a displayed-page generating module 93, configured to generate an HTML inferred template according to the pre-parsed label stored in the buffer space, parse, according to the HTML inferred template, a page returned after the user requests to access the page, and generate, by binding the parsed page and data in a data source, the page for display to the user; and
a sending module 94, configured to send the page for display to the user, to the client browser.

Further, the inferring module 91 is specifically configured to:
create a page database of a page that the user has requested to access, where a page that the user has accessed historically is stored in the page database; and
receive the page that the user requests to access, and infer, with reference to the page database, the label that needs to be used by the page that the user next requests to access.

The web server in this embodiment may be configured to execute the technical solution of the method embodiment shown in FIG. 4, and has functional modules corresponding to the steps. Implementation principles and technical effects of the web server in this embodiment are similar to those in the method embodiment shown in FIG. 4, and details are not repeatedly described herein.

On the basis of this embodiment, further, the pre-parsing module 93 is specifically configured to:
generate a request response label queue according to a message that the user requests to access a web page and that is sent by the client browser;
generate a pre-parsed label queue according to the pre-parsed label; and
selectively execute the request response label queue or the pre-parsed label queue according to a preset priority.

On the basis of any of the foregoing web server embodiments, further, the label parsed by the pre-parsing module 92 may be a label with service semantics, or a common component label with data processing and display logic.

Optionally, the page attribute received by the generating module 71 may include a page configuration preference policy, a page data binding location, or a page related parameter, and the client attribute includes a client browser type, a network access type of a client, or a client application scenario type.

Further, the generating module 71 is specifically configured to:
perform, by a user, manual configuration according to the page attribute and/or the client attribute to generate the parsing policy table; or
automatically generate the parsing policy table according to the page attribute and/or the client attribute.

It can be learned from the foregoing that, in the foregoing embodiment, an HTML inferred template is generated in advance, so that a server processes a page in advance, and efficiency of page processing on a server is further improved.

FIG. 10 is a structural diagram of a client browser according to Embodiment 8 of the present invention. As shown in FIG. 10, the client browser 1000 includes:
a sending module 101, configured to send a request page attribute and/or a client attribute to the web server, so that the web server generates a parsing policy table;
a receiving module 102, configured to receive a Hypertext Markup Language HTML inferred template sent by the web server; and
a parsing module 103, configured to, when a page returned after a user requests to access the page is received, parse the returned page according to the HTML inferred template, and generate, by binding the parsed page and data provided by a data source, the page for display to the user.

The web server in this embodiment may be configured to execute the technical solution of the method embodiment shown in FIG. 5, and has functional modules corresponding to the steps. Implementation principles and technical effects of the web server in this embodiment are similar to those in the method embodiment shown in FIG. 5, and details are not repeatedly described herein.

On the basis of this embodiment, further, the receiving module 102 is specifically configured to:
receive the HTML inferred template actively pushed by the web server; or
if a web page returned after the user requests to access the web page needs to be parsed, send a message of requesting to acquire the HTML inferred template to the web server, and then, receive the HTML inferred template to which the web server requests to respond.

On the basis of this embodiment, further, the page attribute sent by the sending module 101 includes a page configuration preference policy, a page data binding location, or a page related parameter, and the client attribute includes a client browser type, a network access type of a client, or a client application scenario type.

It can be learned from the foregoing that, a client browser receives an HTML inferred template sent by a web server, so that a page is processed in advance, thereby improving page processing efficiency.

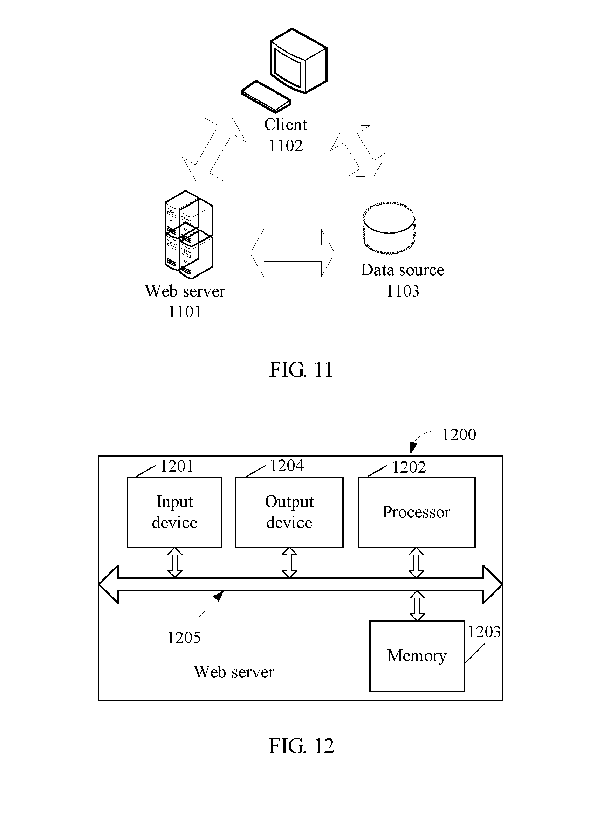

FIG. 11 is an architectural diagram of a page processing system according to Embodiment 9 of the present invention. As shown in FIG. 11, the page processing system includes a web server 1101, a client 1102, and a data source 1103, where the web server 1101 includes the web server shown in any of FIG. 7 to FIG. 9, and the client 1102 includes the client browser shown in FIG. 10.

The data source 1103 may provide various services, such as a representational state transfer (Representational State Transfer, REST) interface, and a service-oriented architecture (service-oriented architecture, SOA) interface, of a pure data source, may be used as data sources.

According to the processing system provided in this embodiment, logic related to user interaction, label parsing, and data binding may be distributed to a browser to which a user accesses, so that performance of a server software system can be improved. Compared with a server in the prior art, with configurations being the same as the foregoing server, a server in this embodiment may be connected to more users and perform other service processing.

The web server in this embodiment may be configured to execute the technical solution of the method embodiment shown in FIG. 3 or FIG. 4, and has functional modules corresponding to the steps. Implementation principles and technical effects of the web server in this embodiment are similar to those in the method embodiment shown in FIG. 3 or FIG. 4, and details are not repeatedly described herein.

The client browser in this embodiment may be configured to execute the technical solution of the method embodiment shown in FIG. 5, and has functional modules corresponding to the steps. Implementation principles and technical effects of the client browser in this embodiment are similar to those in the method embodiment shown in FIG. 5, and details are not repeatedly described herein.

It can be learned from the foregoing that, according to the page processing system provided in this embodiment, a parsing policy table is generated before page processing, so that during page processing, a page parsing manner may be flexibly selected according to comprehensive consideration of different parameters, thereby improving page processing efficiency.

FIG. 12 is a structural diagram of a web server according to Embodiment 10 of the present invention. As shown in FIG. 12, a web server 1200 may include an input device 1201 (optional), an output device 1204 (optional), a processor 1202, and a memory 1203.

The memory 1203 may include a read-only memory and a random access memory, and provide instructions and data for the processor 1202. The memory 1203 may also include a non-volatile random access memory (NVRAM).

The memory 1203 stores the following elements: an executable module or a data structure, or subsets of the executable module and the data structure, or extended sets of the executable module and the data structure:
an operation instruction: including various operation instructions and used to implement various operations.
an operating system: including various system programs and configured to implement various basic services and process hardware-based tasks.

In this embodiment of the present invention, the processor 1202, by calling an operation instruction (the operation instruction may be stored in the operating system) stored in the memory 1203, executes the following operations:
generating a parsing policy table according to a page attribute and/or a client attribute sent by a client browser and received by the input device 1201, where the parsing policy table is used to determine a parsing manner for a page that a user requests to access, and the parsing manner includes parsing on a web server and/or parsing on the client browser;
determining, according to the parsing policy table, the parsing manner for the page that the user requests to access; and
parsing, according to the parsing manner, the page that the user requests to access.

In this embodiment of the present invention, the web server 1200 generates a parsing policy table by using the processor 1202, and determines a processing manner for page parsing according to the parsing policy table, thereby improving page processing flexibility and efficiency.

The processor 1202 controls operations of the web server 1200, and the processor 1202 may also be called CPU (Central Processing Unit, central processing unit). The memory 1203 may include a read-only memory and a random access memory, and provide instructions and data for the processor 1202. The memory 1203 may also include a non-volatile random access memory (NVRAM). In a specific application, all components of the web server 1200 are coupled together by using a bus system 1205, where the bus system 1205 may further include, in addition to a data bus, a power bus, a control bus, a state signal bus, and so on. For clearer description, all kinds of buses are denoted as the bus system 1205 in the drawing.

The method disclosed in the foregoing embodiment of the present invention may be applied to the processor 1202, or be implemented by the processor 1202. The processor 1202 may be an integrated circuit chip and has a signal processing capability. In an implementation process, the steps of the foregoing method may be implemented in a form of an integrated logic circuit of hardware in the processor 1202 or software. The foregoing processor 1202 may be a general purpose processor, a digital signal processor (DSP), an application-specific integrated circuit (ASIC), a field programmable gate array (FPGA) or another programmable logical device, a discrete gate or transistor logic device, or a discrete hardware component, and may implement or execute the methods, steps and logical block diagrams disclosed in the embodiments of the present invention. The general purpose processor may be a microprocessor, or the processor may be any conventional processor or the like. The steps of the methods disclosed in the embodiments of the present invention may be executed by a hardware decoding processor directly, or be executed by a combination of hardware and a software module in a decoding processor. The software module may be located in a random access memory, a flash memory, a read-only memory, a programmable read-only memory, an electrically erasable programmable memory, a register, or any other storage media that are mature in the art. The storage medium is located in the memory 1203, and the processor 1202 reads information in the memory 1203, and in conjunction with hardware of the processor 1203, completes the steps of the foregoing method.

Optionally, the parsing manner is parsing on a client, and the processor 1202 may further infer a label that needs to be used by a page that the user next requests to access; the processor 1202 may further pre-parse the inferred label that needs to be used by the page, and store the pre-parsed label in buffer space; the output device 1204 may further generate a Hypertext Markup Language HTML inferred template according to the pre-parsed label stored in the buffer space, and send the HTML inferred template to the client browser, so that the client browser parses a page returned after the user requests to access the page, and generates, by binding the parsed page and data in a data source, the page for display to the user.

Optionally, the parsing manner is parsing on the server, and the processor 1202 may further infer a label that needs to be used by a page that the user next requests to access; the processor 1202 may further pre-parse the inferred label that needs to be used by the page, and store the pre-parsed label in buffer space; the processor 1202 may further generate an HTML inferred template according to the pre-parsed label stored in the buffer space, parse, according to the HTML inferred template, a page returned after the user requests to access, and generate, by binding the parsed page and data in a data source, the page for display to the user; and the processor 1202 may further send the page for display to the user, to the client browser.

Optionally, the processor 1202 may specifically generate a request response label queue according to a message that the user requests to access a page and that is sent by the client browser; generate a pre-parsed label queue according to the pre-parsed label; and selectively execute the request response label queue or the pre-parsed label queue according to a preset priority.

Optionally, the processor 1202 may specifically pre-parse the inferred label that needs to be used by the page, store, in buffer space, a common label of a plurality of users, a part of parsed labels, or a label that needs to be buffered according to a decision based on the parsing policy table, and send a label peculiar to the user to the client browser to store the label in buffer space of the client browser.

Optionally, the processor 1202 may specifically create a page database of a page that the user has requested to access, where a page that the user has accessed historically is stored in the page database; and the input device 1201 may receive the page that the user requests to access, and infer, with reference to the page database, the label that needs to be used by the page that the user next requests to access.

Optionally, the output device 1204 may specifically actively push the HTML inferred template to the client browser; or after the input device 1201 receives a message that is of requesting to acquire the HTML inferred template and is sent by the client browser, the output device 1204 sends the HTML inferred template to the client browser.

Optionally, the label parsed by the pre-parsing module is a label with service semantics, or a common component label with data processing and display logic.

Optionally, the page attribute received by the input device 1201 includes a page configuration preference policy, a page data binding location, or a page related parameter, and the client attribute includes a client browser type, a network access type of a client, or a client application scenario type.

Optionally, the processor 1202 may be specifically configured to perform manual configuration according to the page attribute and/or the client attribute to generate the parsing policy table; or automatically generate the parsing policy table according to the page attribute and/or the client attribute.

In addition, the web server 1200 may also execute the method embodiment shown in FIG. 3 or FIG. 4, and details are not repeatedly described in this embodiment of the present invention.

It can be learned from the foregoing that, according to a web server provided in this embodiment, a parsing policy table is generated in advance, so that a page parsing manner may be determined according to the parsing policy table during page processing, which, compared with a fixed label parsing manner in the prior art, improves page processing efficiency and flexibility.

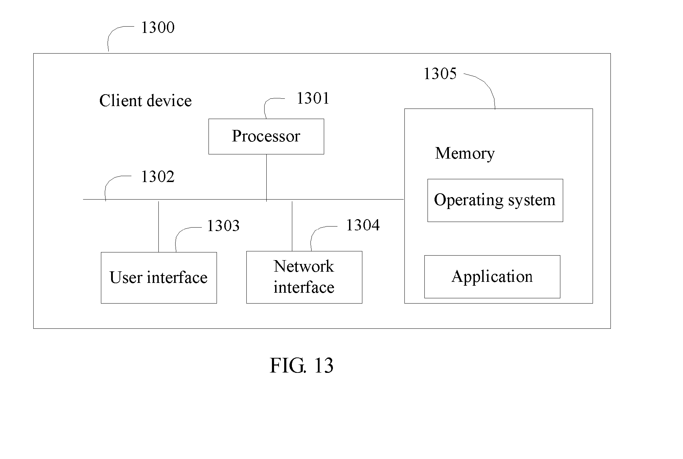

FIG. 13 is a structural diagram of a client device according to Embodiment 11 of the present invention. As shown in FIG. 13, the client device 1300 includes: at least one processor 1301, at least one network interface 1304 or another user interface 1303, a memory 1305, and at least one communications bus 1302. The communications bus 1302 is configured to implement connection and communication between these components. The client device 1300 optionally includes the user interface 1303, and includes a display (for example, a touchscreen, an LCD, a CRT, Holographic imager(Holographic) or projector (projector)), a keyboard or a click device (for example, a mouse, a trackball (trackball), a touch panel or a touchscreen).

The memory 1305 may include a read-only memory and a random access memory, and provide instructions and data for the processor 1301. The memory 1305 may also include a non-volatile random access memory (NVRAM).

In this embodiment of the present invention, the network interface 1304 is configured to: send a request page attribute and/or a client attribute to the web server, so that the web server generates a parsing policy table; and receive a Hypertext Markup Language HTML inferred template sent by the web server; and the processor 1301 is configured to: when a page returned after a user requests to access the page is received, parse the returned page according to the HTML inferred template, and generate, by binding the parsed page and data provided by a data source, the page for display to the user.

Optionally, as one embodiment, the network interface 1304 is specifically configured to: receive the HTML inferred template actively pushed by the web server; or
if a web page returned after the user requests to access the web page needs to be parsed, send a message of requesting to acquire the HTML inferred template to the web server, and then, receive the HTML inferred template to which the web server requests to respond.

Further, the page attribute sent by the network interface 1304 includes a page configuration preference policy, a page data binding location, or a page related parameter, and the client attribute includes a client browser type, a network access type of a client, or a client application scenario type.

In addition, the client device 1300 may also execute the method embodiment shown in FIG. 5, and details are not repeatedly described in this embodiment of the present invention.

The client device mentioned in this embodiment may be a user terminal device, such as a tablet computer or an intelligent terminal.

It can be learned from the foregoing that, according to a client device provided in the foregoing embodiment, an HTML pushing template sent by a web server is received, so that page is processed in advance on a client browser, thereby improving page processing efficiency.

Persons of ordinary skill in the art may understand that all or a part of the steps of the method embodiments may be implemented by a program instructing relevant hardware (for example, a processor connected to memory). The program may be stored in a computer readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A page processing method, comprising:
generating a parsing policy table according to a page attribute and/or a client attribute received from a client browser, wherein the parsing policy table is used to determine a parsing manner for a page that a user requests to access, and the parsing manner comprises parsing on a web server and/or parsing on the client browser;
determining, according to the parsing policy table, the parsing manner for the page that the user requests to access; and
parsing, according to the parsing manner, the page that the user requests to access.

2. The method according to claim 1, wherein if it is determined, according to the parsing policy table, that the parsing manner for the page that the user requests to access is parsing on the client browser, the parsing, according to the parsing manner, the page that the user requests to access comprises:
inferring a label that needs to be used by a page that the user next requests to access;
pre-parsing the inferred label that needs to be used by the page, and storing the pre-parsed label in buffer space; and
generating a Hypertext Markup Language HTML inferred template according to the pre-parsed label stored in the buffer space, and sending the HTML inferred template to the client browser, so that the client browser parses a page returned after the user requests to access the page, and generates, by binding the parsed page and data in a data source, the page for display to the user.

3. The method according to claim 1, wherein if it is determined, according to the parsing policy table, that the parsing manner for the page that the user requests to access is parsing on the server, the parsing, according to the parsing manner, the page that the user requests to access comprises:
inferring a label that needs to be used by a page that the user next requests to access;
pre-parsing the inferred label that needs to be used by the page, and storing the pre-parsed label in buffer space;
generating an HTML inferred template according to the pre-parsed label stored in the buffer space, parsing, according to the HTML inferred template, a page returned after the user requests to access the page, and generating, by binding the parsed page and data in a data source, the page for display to the user; and
sending the page for display to the user to the client browser.

4. The method according to claim 3, wherein the parsing, according to the HTML inferred template, a page returned after the user requests to access the page comprises:
generating a request response label queue according to a message that the user requests to access a web page and that is sent by the client browser;
generating a pre-parsed label queue according to the pre-parsed label; and
selectively executing the request response label queue or the pre-parsed label queue according to a preset priority.

5. The method according to claim 2 or 3, wherein the pre-parsing the inferred label that needs to be used by the page, and storing the pre-parsed label in buffer space comprises:
pre-parsing the inferred label that needs to be used by the page, storing, in buffer space, a common label of a plurality of users, a part of parsed labels, or a label that needs to be buffered according to a decision based on the parsing policy table, and sending a label peculiar to the user to the client browser and storing the label in buffer space of the client browser.

6. The method according to claim 2 or 3, wherein the inferring a label that needs to be used by a page that the user next requests to access comprises:
creating a page database of a page that the user has requested to access, wherein a page that the user has accessed historically is stored in the page database; and
receiving the page that the user requests to access, and inferring, with reference to the page database, the label that needs to be used by the page that the user next requests to access.

7. The method according to claim 2, wherein the sending the HTML inferred template to the client browser comprises:
actively pushing the HTML inferred template to the client browser; or
sending the HTML inferred template to the client browser after a message that is of requesting to acquire the HTML inferred template and is sent by the client browser is received.

8. The method according to any one of claims 2 to 7, wherein the label is a label with service semantics, or a common component label with data processing and display logic.

9. The method according to claim 1, wherein the page attribute comprises a page configuration preference policy, a page data binding location, or a page related parameter, and the client attribute comprises a client browser type, a network access type of a client, or a client application scenario type.

10. A page processing method, comprising:
sending a request page attribute and/or a client attribute to the web server, so that the web server generates a parsing policy table;
receiving a Hypertext Markup Language HTML inferred template sent by the web server; and
when a page returned after a user requests to access the page is received, parsing the returned page according to the HTML inferred template, and generating, by binding the parsed page and data provided by a data source, the page for display to the user.

11. The method according to claim 10, wherein the receiving the HTML inferred template sent by the web server comprises:
receiving the HTML inferred template actively pushed by the web server; or
if a web page returned after the user requests to access the web page needs to be parsed, sending a message of requesting to acquire the HTML inferred template to the web server, and then, receiving the HTML inferred template to which the web server requests to respond.

12. The method according to claim 10, wherein the page attribute comprises a page configuration preference policy, a page data binding location, or a page related parameter, and the client attribute comprises a client browser type, a network access type of a client, or a client application scenario type.

13. A web server, comprising:
a generating module, configured to generate a parsing policy table according to a page attribute and/or a client attribute received from a client browser, wherein the parsing policy table is used to determine a parsing manner for a page that a user requests to access, and the parsing manner comprises parsing on a web server and/or parsing on the client browser;
a determining module, configured to determine, according to the parsing policy table, the parsing manner for the page that the user requests to access; and
a parsing module, configured to parse, according to the parsing manner, the page that the user requests to access.

14. The web server according to claim 13, wherein the parsing manner is parsing on a client; and the web server further comprises:
an inferring module, configured to infer a label that needs to be used by a page that the user next requests to access;
a pre-parsing module, configured to pre-parse the inferred label that needs to be used by the page, and store the pre-parsed label in buffer space; and
a sending module, configured to generate a Hypertext Markup Language HTML inferred template according to the pre-parsed label stored in the buffer space, and send the HTML inferred template to the client browser, so that the client browser parses a page returned after the user requests to access the page, and generates, by binding the parsed page and data in a data source, the page for display to the user.

15. The web server according to claim 13, wherein the parsing manner is parsing on the server; and the web server further comprises:
an inferring module, configured to infer a label that needs to be used by a page that the user next requests to access;
a pre-parsing module, configured to pre-parse the inferred label that needs to be used by the page, and store the pre-parsed label in buffer space;
a displayed-page generating module, configured to generate an HTML inferred template according to the pre-parsed label stored in the buffer space, parse, according to the HTML inferred template, a page returned after the user requests to access the page, and generate, by binding the parsed page and data in a data source, the page for display to the user; and
a sending module, configured to send the page for display to the user, to the client browser.

16. The web server according to claim 15, wherein the parsing module is specifically configured to:
generate a request response label queue according to a message that the user requests to access a web page and that is sent by the client browser;
generate a pre-parsed label queue according to the pre-parsed label; and
selectively execute the request response label queue or the pre-parsed label queue according to a preset priority.

17. The web server according to claim 14 or 15, wherein the pre-parsing module is specifically configured to:
pre-parse the inferred label that needs to be used by the page, store, in buffer space, a common label of a plurality of users, a part of parsed labels, or a label that needs to be buffered according to a decision based on the parsing policy table, and send a label peculiar to the user to the client browser and store the label in buffer space of the client browser.

18. The web server according to claim 14 or 15, wherein the inferring module is specifically configured to:
create a page database of a page that the user has requested to access, wherein a page that the user has accessed historically is stored in the page database; and
receive the page that the user requests to access, and infer, with reference to the page database, the label that needs to be used by the page that the user next requests to access.

19. The web server according to claim 14, wherein the sending module is specifically configured to:
actively push the HTML inferred template to the client browser; or
send the HTML inferred template to the client browser after a message that is of requesting to acquire the HTML inferred template and is sent by the client browser is received.

20. The web server according to any one of claims 14 to 19, wherein the label parsed by the pre-parsing module is a label with service semantics, or a common component label with data processing and display logic.

21. The web server according to claim 13, wherein the page attribute received by the generating module comprises a page configuration preference policy, a page data binding location, or a page related parameter, and the client attribute comprises a client browser type, a network access type of a client, or a client application scenario type.

22. A client browser, comprising:
a sending module, configured to send a request page attribute and/or a client attribute to the web server, so that the web server generates a parsing policy table;
a receiving module, configured to receive a Hypertext Markup Language HTML inferred template sent by the web server; and
a parsing module, configured to, when a page returned after a user requests to access the page is received, parse the returned page according to the HTML inferred template, and generate, by binding the parsed page and data provided by a data source, the page for display to the user.

23. The client browser according to claim 22, wherein the receiving module is specifically configured to:
receive the HTML inferred template actively pushed by the web server; or
if a web page returned after the user requests to access the web page needs to be parsed, send a message of requesting to acquire the HTML inferred template to the web server, and then, receive the HTML inferred template to which the web server requests to respond.

24. The client browser according to claim 22, wherein the page attribute sent by the sending module comprises a page configuration preference policy, a page data binding location, or a page related parameter, and the client attribute comprises a client browser type, a network access type of a client, or a client application scenario type.

25. A page processing system, comprising a web server, a client, and a data source, wherein the web server comprises the web server according to any one of claims 13 to 21, and the client comprises the client browser according to any one of claims 22 to 24.
